(19) **Europäisches Patentamt**

**European Patent Office**

**Office européen des brevets**

(11) **EP 0 981 177 A2**

(12) **EUROPÄISCHE PATENTANMELDUNG**

(43) Veröffentlichungstag:
**23.02.2000 Patentblatt 2000/08**

(51) Int. Cl.[7]: **H01Q 9/04**, H01Q 1/52, H01Q 1/24

(21) Anmeldenummer: **99202590.8**

(22) Anmeldetag: **09.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.08.1998 DE 19836952**

(71) Anmelder:
- **Philips Corporate Intellectual Property GmbH**
  **52064 Aachen (DE)**
  Benannte Vertragsstaaten:
  **DE**
- **Koninklijke Philips Electronics N.V.**
  **5621 BA  Eindhoven (NL)**
  Benannte Vertragsstaaten:
  **FR GB IT**

(72) Erfinder:
- **Hilgers, Achim**
  **Röntgenstrasse 24, 22335 Hamburg (DE)**
- **Heinrichs, Frank**
  **Röntgenstrasse 24, 22335 Hamburg (DE)**
- **Porath, Rebekka**
  **Röntgenstrasse 24, 22335 Hamburg (DE)**

(74) Vertreter:
**Schmalz, Günther, Dipl.-Ing.**
**Philips Corporate Intellectual Property GmbH,**
**Habsburgerallee 11**
**52064 Aachen (DE)**

(54) **Sende- und Empfangsvorrichtung**

(57)    Die Erfindung bezieht sich auf eine Sende- und Empfangsvorrichtung für wenigstens zwei Frequenzbereiche, bei der wenigstens eine Antennenanordnung für jeweils einen Frequenzbereich vorgesehen ist. Um eine bessere Sende- und Empfangsvorrichtung mit einfacherer Trennung von verschiedenen Frequenzbereichen zu schaffen, wird vorgeschlagen, wenigstens eine dielektrische Resonatorantenne (DRA) zur Bildung wenigstens einer Antennenanordnung vorzusehen. Eine dielektrische Resonatorantenne ist aufgrund ihrer physikalischen Eigenschaften nur in einem schmalen Frequenzbereich um ihre Resonanzfrequenz funktionsfähig. Daher ist eine aus einer dielektrischen Resonatorantenne gebildete Antennenanordnung sehr schmalbandig, womit eine sehr gute Trennung von unterschiedlichen Frequenzbereichen erreicht wird.

FIG. 4

FIG. 3

EP 0 981 177 A2

**Beschreibung**

Die Erfindung betrifft eine Sende- und Empfangsvorrichtung für wenigstens zwei Frequenzbereiche, bei der wenigstens eine Antennenanordnung für jeweils einen Frequenzbereich vorgesehen ist.

Weiterhin betrifft die Erfindung noch ein Mobilfunkgerät mit einer solchen Sende- und Empfangsvorrichtung.

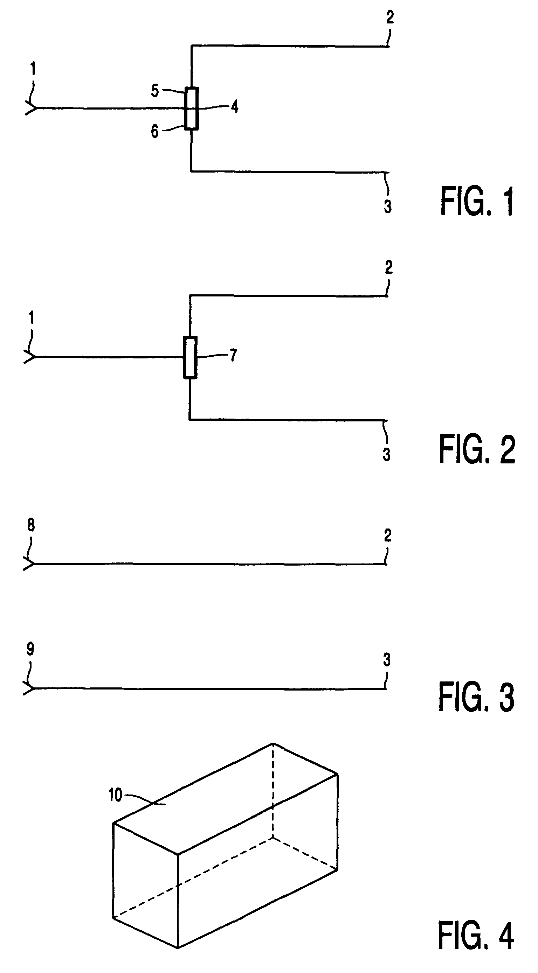

Sende- und Empfangsvorrichtungen für wenigstens zwei verschiedene Frequenzbereiche werden beispielsweise für Schnurlostelefone oder im Mobilfunkbereich verwendet. Die verschiedenen Frequenzbereiche beziehen sich dabei zum Beispiel auf das Sende- und das Empfangsfrequenzband. Die Figur 1 zeigt ein schematisches Schaltbild einer Sende- und Empfangsvorrichtung in einem Mobilfunktelefon. Dabei wird eine Antenne 1 verwendet, um Daten zu senden und zu empfangen. Um zu verhindern, daß ein Sendesignal in den Empfangskanal 2 gelangt, müssen der Sendekanal 3 und der Empfangskanal 2 getrennt werden. Dazu kann ein Duplexfilter 4 verwendet werden, das aus zwei scharfkantigen Bandpassfiltern 5 und 6 besteht. Dabei ist ein Bandpassfilter 5 auf Empfangsfrequenzband und das andere Filter 6 auf das Sendefrequenzband abgestimmt. Dadurch gelangt ein Sendesignal zwar zur Antenne 1, da das Filter 6 für die Sendefrequenz ein geringe Dämpfung hat, jedoch nicht in den Empfangskanal 2, da das Filter 5 dieses Frequenzband sperrt. Ein Empfangssignal von der Antenne 1 wird vom Bandpassfilter 5 nur gering gedämpft und gelangt so in den Empfangskanal 2, während es vom Filter 6 stark gedämpft wird. Daher muß das Duplexfilter 4 sehr geringe Durchgangsverluste bei einem sehr scharfkantigen Filterverhalten aufweisen. Weiterhin kann ein aktiver elektronischer Schalter 7 (z.B. mittels PIN-Dioden realisiert) zur Trennung von Sendekanal 3 und Empfangskanal 2 an der Antenne 1 verwendet werden, wie in der Figur 2 dargestellt. Diese Art des Umschaltens benötigt ein zusätzliches Steuersignal für den Schalter 7, welches aufwendig generiert werden muß. Außerdem werden sehr hohe Anforderungen an die Schalter gestellt, da ein sehr schneller Schaltvorgang realisiert werden muß. Des weiteren müssen noch Filter vorgesehen werden, die das entsprechende Frequenzband für den Sendekanal 3 bzw. Empfangskanal 2 herausfiltern.

Aus der europäischen Patentschrift EP 0 481 986 ist ein Kommunikations-Funkgerät bekannt, das den Sender und den Empfänger in ein und demselben Gehäuse enthält, mit einer ersten Antenne, die mit dem Sender verbunden und auf ihn abgestimmt ist, und einer zweiten Antenne, die mit dem Empfänger verbunden und auf ihn abgestimmt ist, wobei die Antennen voneinander getrennt sind. Das Kommunikations-Funkgerät umfaßt ein Gehäuse, in dem ein Sender und ein Empfänger untergebracht sind. Das Kommunikations-Funkgerät kann gleichzeitig Senden und Empfangen.

Eine erste Antenne ist mit dem Empfänger und eine zweite Antenne mit dem Sender verbunden, wobei der Sender und der Empfänger in verschiedenen Frequenzen arbeiten. Die auf die unterschiedlichen Frequenzen abgestimmten Antennen sind jeweils über einen Filter mit dem Empfänger bzw. dem Sender verbunden. Dabei wird eine Trennung von Sende- und Empfangskanal dadurch erreicht, daß die Sende- und Empfangsantenne asymmetrische Strahlungscharakteristiken aufweisen und die Position der Strahlungscharakteristik so gewählt ist, daß die Antennenwirkung jeweils vom Sender und Empfänger weg gerichtet ist. Dies ist jedoch insbesondere bei Geräten für Übertragungssysteme sehr nachteilig, die in der gleichen Richtung Senden und Empfangen. Weiterhin ist meist eine ähnliche Strahlungscharakteristik für Senden und Empfangen in einer bestimmten Richtung erforderlich und/oder gewünscht.

Daher besteht die Aufgabe der Erfindung darin, eine bessere Sende- und Empfangsvorrichtung mit einfacherer Trennung von verschiedenen Frequenzbereichen zu schaffen.

Die Aufgabe der Erfindung wird dadurch gelöst, daß wenigstens eine dielektrische Resonatorantenne (DRA) zur Bildung wenigstens einer Antennenanordnung vorgesehen ist. Eine dielektrische Resonatorantenne ist aufgrund ihrer physikalischen Eigenschaften nur in einem schmalen Frequenzbereich um ihre Resonanzfrequenz funktionsfähig. Daher ist eine aus einer dielektrischen Resonatorantenne gebildete Antennenanordnung sehr schmalbandig, womit eine sehr gute Trennung von unterschiedlichen Frequenzbereichen, z. B. für Senden und Empfangen, erreicht wird. Durch Veränderung der Geometrie oder anderer Parameter der DRA kann die Resonanzfrequenz und die Bandbreite an die Anforderungen verschiedener Übertragungssysteme bzgl. der einzuhaltenden Frequenzbereiche angepaßt werden.

Bei einer bevorzugten Ausführung der Erfindung ist eine erste Antenne zum Empfang in einem ersten Frequenzbereich und eine zweite Antenne zum Senden in einem zweiten Frequenzbereich vorgesehen. Diese Ausführungsform eignet sich besonders für die Verwendung in einem Übertragungssystem mit unterschiedlichen Frequenzbereichen für Senden und Empfangen, wie beispielsweise GSM900, GSM1800, DECT o.ä.

Eine weitere vorteilhafte Ausgestaltung der Erfindung ergibt sich, wenn eine erste Antenne zum Empfang (oder Senden) in einem Frequenzbereich in einem ersten Übertragungssystem und eine zweite Antenne zum Empfang (oder Senden) in einem Frequenzbereich in einem zweiten Übertragungssystem vorgesehen ist. Bei dieser Ausgestaltung kann die Sende- und Empfangsvorrichtung in verschiedenen Übertragungssystemen gleichzeitig betrieben werden. Dabei können insbesondere auch mehr als zwei Antennen vorgesehen werden, wodurch mehr Frequenzbereiche verwendet werden können. Außerdem sind weitere Kombinationen von verschiedenen Antennen für unterschiedliche Frequenzbereiche aus verschiedenen Übertragungssystemen in einer Sende- und Empfangsvorrichtung denkbar.

Des weiteren wird die Aufgabe der Erfindung noch durch ein Mobilfunkgerät mit einer Sende- und Empfangsvorrichtung gelöst, bei dem wenigstens eine dielektrische Resonatorantenne (DRA) zur Bildung wenigstens einer Antennenanordnung vorgesehen ist.

Im folgenden soll ein Ausführungsbeispiel der Erfindung anhand von Zeichnungen näher erläutert werden. Dabei zeigen

Figur 1: ein schematisches Schaltbild einer Sende- und Empfangsvorrichtung mit einem Duplexfilter,

Figur 2: ein schematisches Schaltbild einer Sende- und Empfangsvorrichtung mit einem elektronischen Schalter und

Figur 3: ein schematisches Schaltbild einer erfindungsgemäßen Sende- und Empfangsvorrichtung.

Figur 4: eine dielektrische Resonatorantenne zur Verwendung in einer erfindungsgemäßen Sende- und Empfangsvorrichtung.

In der Figur 3 ist eine Sende- und Empfangsvorrichtung dargestellt, die einen Empfangskanal 2 mit einer Empfangsantenne 8 und einen Sendekanal 3 mit einer Sendeantenne 9 enthält. Als Empfangsantenne 8 und Sendeantenne 9 werden dielektrische Resonatorantennen (DRA) eingesetzt, die sich durch einen hohen Miniaturisierungsgrad und der Möglichkeit der Oberflächenmontage (SMD-Technik) auszeichnen. Außerdem ist eine DRA aufgrund ihrer physikalischen Eigenschaften sehr schmalbandig (nur in einem schmalen Frequenzbereich um die Resonanzfrequenz funktionsfähig). Die dielektrische Resonatorantenne besteht aus einem dielektrischen Körper (meist aus einer Keramik), der auf einer metallischen Oberfläche angebracht wird. Es können aber auch andere Antennen mir solchen Eigenschaften verwendet werden, wie z. B. eine Microstrip-Antenne, bei der auf einem (meist dielektrischen) Substrat eine leitfähige Struktur als strahlendes Element aufgebracht wird, während eine leitfähige Schicht auf der Rückseite des Substrates das Bezugspotential bildet. Die Sendeantenne 9 ist auf die Sendefrequenz und die Empfangsantenne 8 auf die Empfangsfrequenz abgestimmt. Wegen der schmalbandigen Eigenschaften sind keine weiteren Filter zur Trennung von Empfangskanal 8 und Sendekanal 9 erforderlich. Die Abstimmung auf die entsprechenden Frequenzbereiche kann durch spezielles Design des strahlenden Elementes, des dielektrischen Substrates (Resonators) oder der Art und Weise der Zuführung des Signals erfolgen. Das Signal wird meist über eine Koaxialleitung oder eine Microstripleitung zugeführt.

Mit einer Sende- und Empfangsvorrichtung mit einer Empfangsantenne 8 und einer Sendeantenne 9, die jeweils mittels einer dielektrischen Resonatorantenne realisiert werden, können deutlich schmalere Bandbreiten erreicht werden. Für den Betrieb einer Sende- und Empfangsvorrichtung für verschiedene Frequenzbereiche ist insbesondere eine Begrenzung der jeweiligen Bandbreite wichtig. Damit wird eine Störung eines Kanals durch ein Signal in einem anderen Kanal (für einen anderen Frequenzbereich) verhindert. Da bei der erfindungsgemäßen Sende- und Empfangsvorrichtung schon die verwendeten Antennen 8 und 9 sehr schmalbandig sind, kann auf zusätzliche Filter verzichtet werden.

In der Figur 4 ist eine DRA 10 in der als beispielhaft anzusehenden Grundform dargestellt. Neben der Form als Quader sind auch andere Formen möglich, wie zum Beispiel zylinder- oder kugelförmige Geometrien. Dielektrische Resonatorantennen sind resonante Bauteile, die nur in einem schmalen Band um eine ihrer Resonanzfrequenzen arbeiten. Die Resonanzfrequenz der DRA 10 ist abhängig von den Abmessungen der DRA 10. Um möglichst geringe Abmessungen zu erhalten, wird deshalb meist die niedrigste Resonanz ($Te^2_{111}$-Mode) verwendet. Die gezeigte DRA 10 wird durch einen Quader mit den Abmessungen $40x40x7,6$ $mm^3$ aus einer (Ba, Nd, Gd)$TiO_3$) Keramik realisiert. Dieses Material ist Hochfrequenz geeignet, hat eine Dielektrizitätszahl von etwa $\varepsilon_r$=85, niedrige dielektrische Verluste von $\tan\delta=4x10^{-4}$ und einen niedrigen dielektrischen Temperaturkoeffizienten von $\tau_\varepsilon$=-30ppm/$^\circ$C (NPO-Charakteristik). Die DRA 10 arbeitet bei einer Arbeitsfrequenz von 1GHz in ihrer niedrigsten Resonanz ($TE^2_{111}$-Mode). Bei anderen Abmessungen wird die Resonanzfrequenz verschoben. Typische Abmessungen für eine DRA 10 mit einer Arbeitsfrequenz von etwa 1,9GHz (DECT) liegen bei etwa $20x20x6mm^3$.

Besonders geeignet ist eine solche Sende- und Empfangsvorrichtung für den Mobilfunkbereich, bei dem unterschiedliche Frequenzbereiche für das Senden und Empfangen verwendet werden (z. B. nach GSM die Frequenzbereiche 890-915 MHz und 935-960 MHz für das Senden und Empfangen). Weiterhin sind auch Schnurlostelefone nach DECT, Mobilfunkgeräte für DCS1800 und PHS sowie Geräte für andere Übertragungssysteme, die verschiedene Frequenzbereiche in einem Gerät nutzen, mögliche Anwendungsgebiete. Ebenfalls denkbar sind kombinierte Geräte, die in mehreren Übertragungssystemen arbeiten.

**Patentansprüche**

1. Sende- und Empfangsvorrichtung für wenigstens zwei Frequenzbereiche, bei der wenigstens eine Antennenanordnung (8, 9) für jeweils einen Frequenzbereich vorgesehen ist,
<u>dadurch gekennzeichnet,</u>
daß wenigstens eine dielektrische Resonatorantenne (DRA) zur Bildung wenigstens einer Antennenanordnung (8, 9) vorgesehen ist.

2. Sende- und Empfangsvorrichtung nach Anspruch 1,
<u>dadurch gekennzeichnet,</u>
daß eine erste Antenne (8) zum Empfang in einem ersten Frequenzbereich und eine zweite Antenne (9) zum Senden in einem zweiten Frequenzbereich vorgesehen ist.

3. Sende- und Empfangsvorrichtung nach Anspruch 1,
<u>dadurch gekennzeichnet,</u>
daß eine erste Antenne (8) zum Empfang in einem Frequenzbereich in einem ersten Übertragungssystem und eine zweite Antenne (9) zum Empfang in einem Frequenzbereich in einem zweiten Übertragungssystem vorgesehen ist.

4. Sende- und Empfangsvorrichtung nach Anspruch 1,
<u>dadurch gekennzeichnet,</u>
daß eine erste Antenne (8) zum Senden in einem Frequenzbereich in einem ersten Übertragungssystem und eine zweite Antenne (9) zum Senden in einem Frequenzbereich an einem zweiten Übertragungssystem vorgesehen ist.

5. Mobilfunkgerät mit einer Sende- und Empfangsvorrichtung für wenigstens zwei Frequenzbereiche, bei der wenigstens eine Antennenanordnung (8, 9) für jeweils einen Frequenzbereich vorgesehen ist,
<u>dadurch gekennzeichnet,</u>
daß wenigstens eine dielektrische Resonatorantenne (DRA) zur Bildung wenigstens einer Antennenanordnung (8, 9) vorgesehen ist.

FIG. 1

FIG. 2

FIG. 3

FIG. 4